# EUROPEAN PATENT SPECIFICATION

(11) **EP 3 924 633 B1**
(45) Date of publication and mention of the grant of the patent: **20.09.2023**
(21) Application number: 20706940.2
(22) Date of filing: 13.02.2020
(51) Int. Cl.: F16D 23/06

(54) **COMPACT HIGH LOAD PRE-ENERGIZER**
KOMPAKTER HOCHLASTENERGIEERZEUGER
PRÉ-EXCITATEUR À CHARGE ÉLEVÉE COMPACT

(30) Priority: 14.02.2019 US 201962805355 P
(43) Date of publication of application: 22.12.2021
(73) Proprietor: Eaton Intelligent Power Limited, Dublin 4 (IE)
(72) Inventor: FERNANDES, Michael Vitorino, 13802-116 Mogi Mirim (BR); FERNANDEZ, Josevaldo Roberto, Salto- 13320-040 (BR); BIAGIO, Guilherme Gallo, 13290-000 Louveira (BR)
(74) Representative: Novagraaf Group
(86) International application number: PCT/EP2020/025062
(87) International publication number: WO 2020/164808

(56) References cited:
- EP-A1- 0 157 908
- EP-B1- 0 157 908
- WO-A1-2015/028566

## Description

### FIELD OF THE INVENTION

The invention relates to synchronizer structures of a motor vehicle and more particularly to a pre-energizer structure of a synchronizer of a motor vehicle.

### BACKGROUND OF THE INVENTION

Synchronizers may be utilized on transmissions to shift between various gears. The synchronizer may include a pre-energizing structure to increase the engaging force of the friction surfaces by providing an additive axial force to a synchronizer sleeve. In EP 0 157 908 A1 there is disclosed a synchronizer assembly as it is defined in the pre-characterizing portion of claim 1.

The pre-energizing structure may include a spring loaded ball or roller fixed in a cage. The structure may be arranged on the circumference of the synchronizer body and positioned between the groove in synchro hub and the inner groove in the shift sleeve. The pre-energizing structure may rotate with the synchro hub and is axially movable with the shift sleeve. The pre-energizing structure generates a load on the synchro ring to perform the synchronization process. The pre-energizing structure may also maintain the sliding sleeve in a central position on the hub between both gear wheels and below a limit of axial force.

In general, high pre-energizing loads are necessary for faster shifts. However, increasing the number or size of the pre-energizing structures may require an increase in the size of the various components of the transmissions, which is not desirable.

It would be desirable to have pre-energizing structures that increases the load without an increase in size of the pre-energizing structures.

### SUMMARY OF THE INVENTION

The present invention is a synchronizer assembly having a hub including external teeth formed thereon. The hub has at least one recess formed therein. A shift sleeve including internal teeth formed thereon is disposed about the hub. A pre-energizer assembly is disposed in the at least one recess. The pre-energizer assembly includes a housing disposed in the recess. The housing has two separated bores formed therein. Springs are disposed in each of the two separated bores. Bearing members are disposed in each of the two separated bores and biased by the two springs applying a force to the shift sleeve, wherein each of the bearing members apply the force in parallel to the other bearing member.

### BRIEF DESCRIPTION OF THE DRAWINGS

Figure 1 is a partial perspective sectional view of a hub, shift sleeve and pre-energizer assembly;
Figure 2 is a perspective view of a pre-energizer assembly;
Figure 3 is a partial perspective view of a hub and pre-energizer assembly;
Figure 4A is a partial comparative perspective view of a hub and pre-energizer assembly;
Figure 4B is a partial comparative perspective view of a prior art hub and pre-energizer assembly.

### DETAILED DESCRIPTION OF THE PREFERRED EMBODIMENTS

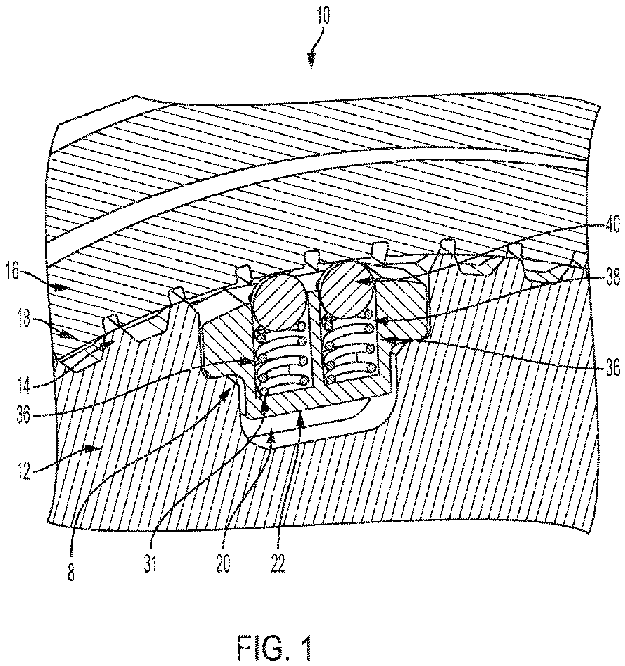

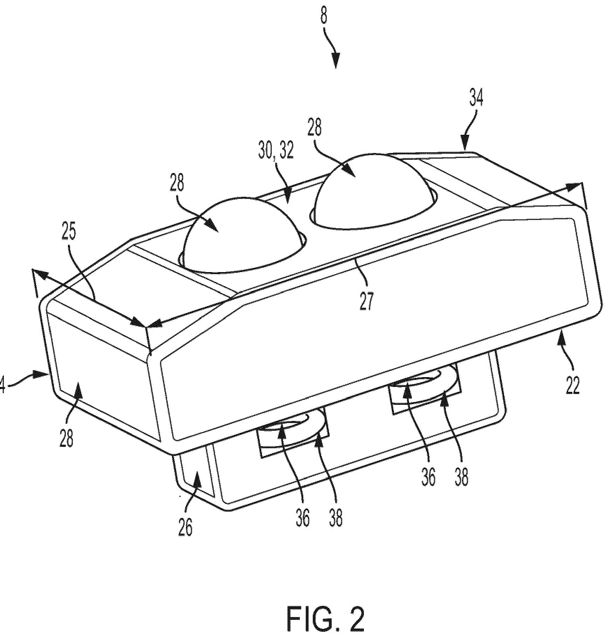

Embodiments of the present invention are directed to a a synchronizer assembly 10 with a pre-energizing assembly 8. Referring to Figures 1-3, the synchronizer assembly 10 includes a hub 12 that may be fixed to a shaft. The hub 12 includes external teeth 14 formed on an outer circumference of the hub 12. A shift sleeve 16 is disposed about the hub 12 and includes internal teeth 18 formed thereon that are meshed with the external teeth 14 of the hub 12.

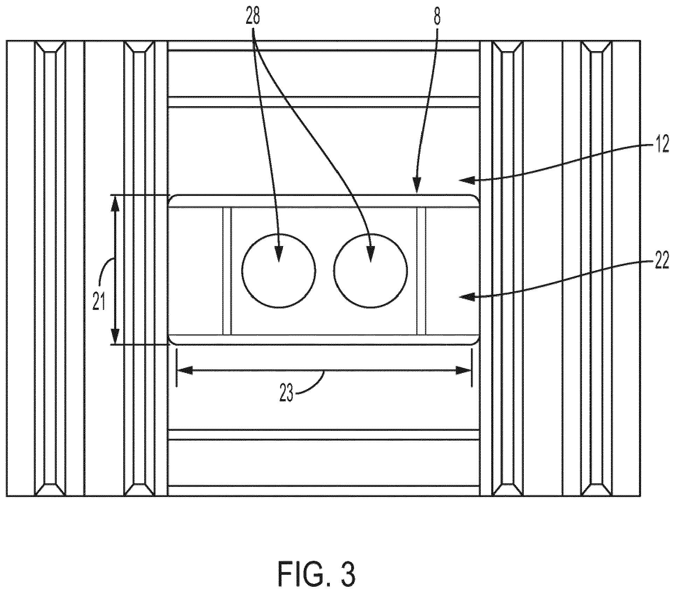

The hub 12 may include various numbers of recesses 20 formed therein about the diameter of the hub 12. In one aspect, at least one recess 20 is formed in the hub 12. The hub 12 may include two recess 20 formed therein or may include a plurality of recesses 20 formed therein. Each recess 20 includes an axial length 21 and a longitudinal length 23 defining an opening size of the recess 20, best seen in Figure 3.

The pre-energizer assembly 8 is disposed in the recess 20 and acts upon the shift sleeve 16 to apply a force to the shift sleeve 16. The pre-energizer assembly 8 includes a housing 22 that is retained in the recess 20. The housing 22 includes a body 24 having a generally rectangular base 26 that extends to an upper portion 28. The upper portion 28 includes top surface 30 having a middle portion 32 bounded by two angled portions 34. The housing 22 includes two separated bores 36 formed therein. The bores 36 may be formed in the middle portion 32. The housing 22 includes an axial length 25 and a longitudinal length 27 that correspond to the size of the recess 20 as described above. In one aspect, the separated bores 36 are positioned along the longitudinal length 27 of the housing 22.

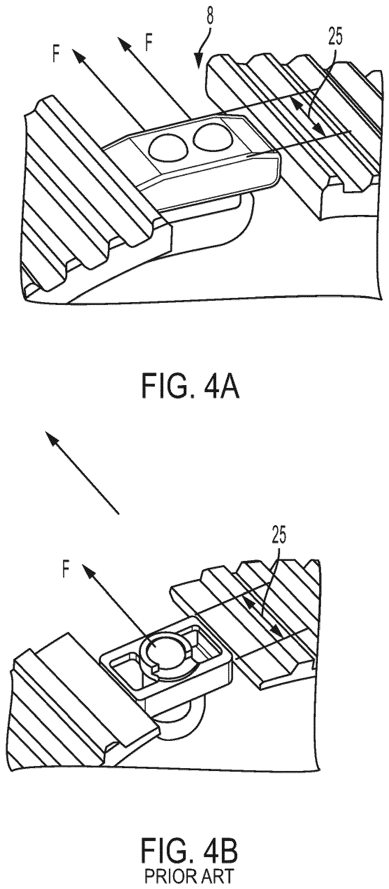

Each of the bores 36 extends from the top surface 30 to a bottom surface 31 that is less than a total thickness of the housing 22. Each of the bores 36 receives a spring 38 disposed therein. The bottom surface 31 acts as a seat for the spring 38. The springs 38 bias a bearing member 40 toward the shift sleeve 16. The bearing members 40 apply a force in parallel to each other and provide twice the load in comparison to a single bearing member 40 such as shown in the comparative figures 4A and 4B.

One advantage of having a pre-energizer assembly 8 with two bearing members 40 and springs 38 is that the pre-energizer assembly 8 can apply twice the pre-energizing load without increasing the axial length 21 of the recess 20 or an axial length 25 of the housing 22. An increase in the axial length 21, 25 would require an increase in the transmission length to maintain the same gear strength and is undesirable.

Another advantage is that the pre-energizer assembly 8 may be utilized to convert a manual transmission to an automatic transmission. For example, an automatic transmission usually shifts faster and requires higher pre-energizing loads in comparison to a manual transmission. This issue may be solved by using the pre-energizer assembly 8 having the same axial length but applying twice the load for a faster shift.

The pre-energizer assembly 8 allows for easy retro fitting of manual transmissions without increasing the axial length of the hub 12. In one aspect, a prior art pre-energizer would need to enlarge the ball and spring diameters such that the synchronizer rings would have to be moved aside for accommodating the bigger pre-energizing construction, and this moving aside would have a repercussion in all the adjacent components, resulting in a longer transmission.

In one aspect, the maximum spring load of the prior art pre-energizer shown in Figure 4B may be about 29N. The pre-energizer assembly 8 shown in Figures 1-4A, having two springs 38 and bearing members 40 may apply twice the maximum load around 58N while maintaining the same radial length.

## Claims

1. A synchronizer assembly (10) comprising:
a hub (12) including external teeth (14) formed thereon, the hub (12) having at least one recess (20) formed therein; and
a shift sleeve (16) including internal teeth (18) formed thereon, the shift sleeve disposed about the hub (12);
a pre-energizer assembly (8) disposed in the at least one recess (20), the pre-energizer assembly including a housing (22) disposed in the recess, **characterized in that** the housing has two separated bores (36) formed therein, springs (38) disposed in each of the two separated bores, bearing members (40) disposed in each of the two separated bores and biased by the two springs applying a force to the shift sleeve (16),
wherein each of the bearing members (40) apply the force in parallel to the other bearing member (40).

2. The synchronizer assembly of claim 1 wherein the hub (12) includes a plurality of recesses (20) formed therein, each of the recesses including the pre-energizer assembly (8) disposed therein.

3. The synchronizer assembly of claim 1 wherein the housing (22) includes a rectangular base (26) extending to an upper portion (28) having a top surface (30), the top surface having a middle portion (32) bounded by two angled portions (34).

4. The synchronizer assembly of claim 3 wherein the two bores (36) are formed in the middle portion (832).

5. The synchronizer assembly of claim 3 wherein the two bores (36) extend through the top surface (30) to a bottom surface (31) defining a spring seat.

6. The synchronizer assembly of claim 1 wherein the housing (22) includes an axial length and a longitudinal length, the two separated bores (36) positioned along the longitudinal length of the housing.

## Patentansprüche

1. Synchronisieranordnung (10), umfassend:
eine Nabe (12), die eine daran ausgebildete äußere Verzahnung (14) einschließt, wobei die Nabe (12) mindestens eine darin ausgebildete Aussparung (20) aufweist; und
eine Schaltmuffe (16), die eine daran ausgebildete innere Verzahnung (18) einschließt, wobei die Schaltmuffe um die Nabe (12) herum angeordnet ist;
eine Energieerzeugeranordnung (8), die in der mindestens einen Aussparung (20) angeordnet ist, wobei die Energieerzeugeranordnung ein Gehäuse (22) einschließt, das in der Aussparung angeordnet ist,
**dadurch gekennzeichnet, dass** das Gehäuse zwei darin ausgebildete getrennte Bohrungen (36), in jeder der zwei getrennten Bohrungen angeordnete Federn (38), Lagerelemente (40), die in jeder der beiden getrennten Bohrungen angeordnet sind und durch die beiden Federn vorgespannt sind, wodurch eine Kraft auf die Schaltmuffe (16) ausgeübt wird, aufweist,
wobei jedes der Lagerelemente (40) die Kraft parallel zu dem anderen Lagerelement (40) aufbringt.

2. Synchronisieranordnung nach Anspruch 1, wobei die Nabe (12) eine Vielzahl von darin ausgebildeten Aussparungen (20) einschließt, wobei jede der Aussparungen die darin angeordnete Energieerzeugeranordnung (8) einschließt.

3. Synchronisieranordnung nach Anspruch 1, wobei das Gehäuse (22) eine rechteckige Basis (26) einschließt, die sich zu einem oberen Abschnitt (28) mit einer oberen Oberfläche (30) erstreckt, wobei die obere Oberfläche einen mittleren Abschnitt (32) aufweist, der durch zwei abgewinkelte Abschnitte (34) begrenzt ist.

4. Synchronisieranordnung nach Anspruch 3, wobei die zwei Bohrungen (36) in dem mittleren Abschnitt (832) ausgebildet sind.

5. Synchronisieranordnung nach Anspruch 3, wobei sich die zwei Bohrungen (36) durch die obere Oberfläche (30) zu einer unteren Oberfläche (31) erstrecken, die einen Federsitz definiert.

6. Synchronisieranordnung nach Anspruch 1, wobei das Gehäuse (22) eine Axiallänge und eine Längslänge einschließt, wobei die zwei getrennten Bohrungen (36) entlang der Längslänge des Gehäuses positioniert sind.

## Revendications

1. Ensemble synchroniseur (10) comprenant :
un moyeu (12) comportant des dents externes (14) formées sur celui-ci, le moyeu (12) ayant au moins un évidement (20) formé à l'intérieur de celui-ci ; et
un manchon de décalage (16) comportant des dents internes (18) formées sur celui-ci, le manchon de décalage étant disposé autour du moyeu (12) ;
un ensemble pré-excitateur (8) disposé dans l'au moins un évidement (20), l'ensemble pré-excitateur comportant un boîtier (22) disposé dans l'évidement, **caractérisé en ce que** le boîtier a deux alésages séparés (36) formés à l'intérieur de celui-ci, des ressorts (38) disposés dans chacun des deux alésages séparés, des éléments de palier (40) disposés dans chacun des deux alésages séparés et sollicités par les deux ressorts appliquant une force au manchon de décalage (16),
dans lequel chacun des éléments de palier (40) applique la force en parallèle à l'autre élément de palier (40).

2. Ensemble synchroniseur selon la revendication 1 dans lequel le moyeu (12) comporte une pluralité d'évidements (20) formés à l'intérieur de celui-ci, chacun des évidements comportant l'ensemble pré-excitateur (8) disposé à l'intérieur de celui-ci.

3. Ensemble synchroniseur selon la revendication 1 dans lequel le boîtier (22) comporte une base rectangulaire (26) s'étendant jusqu'à une partie supérieure (28) ayant une surface supérieure (30), la surface supérieure ayant une partie médiane (32) délimitée par deux parties inclinées (34).

4. Ensemble synchroniseur selon la revendication 3 dans lequel les deux alésages (36) sont formés dans la partie médiane (832).

5. Ensemble synchroniseur selon la revendication 3 dans lequel les deux alésages (36) s'étendent à travers la surface supérieure (30) jusqu'à une surface inférieure (31) définissant un siège de ressort.

6. Ensemble synchroniseur selon la revendication 1 dans lequel le boîtier (22) comporte une longueur axiale et une longueur longitudinale, les deux alésages séparés (36) étant positionnés sur la longueur longitudinale du boîtier.
